(19) Europäisches Patentamt
European Patent Office
Office européen des brevets

(11) **EP 4 428 765 A1**

(12) **EUROPEAN PATENT APPLICATION**

(43) Date of publication:
**11.09.2024 Bulletin 2024/37**

(21) Application number: **23305297.6**

(22) Date of filing: **06.03.2023**

(51) International Patent Classification (IPC):
**G06N 10/20** (2022.01)    **G06N 10/70** (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Alice & Bob**
**75015 Paris (FR)**
• **INRIA - Institut National de Recherche en Informatique et en Automatique**
**78150 Le Chesnay (FR)**

(72) Inventors:
• **GUILLAUD, Jérémie**
**75015 Paris (FR)**
• **LESCANNE, Raphaël**
**75015 Paris (FR)**
• **SARLETTE, Alain**
**78150 Le Chesnay (FR)**
• **GAUTIER, Ronan**
**78150 Le Chesnay (FR)**

(74) Representative: **Cabinet Netter**
**36, avenue Hoche**
**75008 Paris (FR)**

(54) **SYSTEM FOR PERFORMING A QUANTUM GATE AND OPERATION OF A QUANTUM ERROR CORRECTING CODE USING THIS QUANTUM GATE**

(57)    A quantum system for performing a quantum gate comprises a command circuit (8) for selectively applying radiation, a number N of data resonators (4), with N equal to or greater than two, each data resonator (4) having a respective resonance frequency and being coupled to said command circuit (8) for stabilizing a respective data cat qubit, and an ancilla resonator (6) having an ancilla resonance frequency coupled to said command circuit (8) for stabilizing an ancilla cat qubit and being non-linearly coupled via said command circuit (8) to said data resonators (4). The command circuit (8) is arranged to perform a quantum gate by:
a) while stabilizing said ancilla cat qubit, applying a radiation having said ancilla resonance frequency such that said data resonators (4) and said ancilla resonator (6) are substantially simultaneously subject to a Hamiltonian resulting from said radiation having said ancilla resonance frequency,
b) turning off said radiation having said ancilla resonance frequency after a chosen duration. This principle is extended to perform a a quantum correction error code.

**Fig.10**

**Description**

The invention concerns a system for performing a quantum gate, and more specifically the use of such gates in the context of cat qubits.

To extract the joint information of several data qubits, conventional quantum circuits perform a sequence of two-qubit gate (typically CNOT or CZ gate) between an ancilla qubit and the several data qubits before measuring the ancilla qubit. This operation, usually referred as syndrome measurement, in the art requires to perform these two-qubit gates in series.

The realization of these quantum gates is crucial to detect errors and thus perform quantum error correction codes (or "QECC"), which is currently considered as the only way to build a reliable and usable quantum chip. The general idea behind QECC is to use several (at least two) physical qubits to encode a logical qubit, an error detection scheme being put in place to verify that the several physical qubits information do not change over time. If an error is detected, error correction is performed, whether by changing the qubit states themselves or by post treatment of the result of the quantum algorithm involving these qubits.

The characteristics which are used to assess the quality of a quantum gate are its execution time (that is the time for the gate to operate) and the associated error probability. For cat qubits, this error probability depends on the ratio $\kappa_1/\kappa_2$ where $\kappa_1$ is the single photon loss rate (the error rate) of the qubits used to perform the gate, and $\kappa_2$ is the two-photon loss rate (the correction rate) of the qubits used to perform the gate.

The goal is to achieve quantum gates which allow error correction to become more effective as the distance of the error correction code (which relates to the number of physical qubits used to encode a logical qubit) used to perform the error detection scheme grows. Currently, in order to achieve this effect for cat qubits in a repetition code, a ratio $\kappa_1/\kappa_2$ below $5 * 10^{-3}$ is needed. This type of ratio is not currently achieved with cat qubits.

The invention aims at improving the situation. To this end, the Applicant proposes a quantum system for performing a quantum gate comprising a command circuit for selectively applying radiation, a number N of data resonators, with N equal to or greater than two, each data resonator having a respective resonance frequency and being coupled to said command circuit for stabilizing a respective data cat qubit, and an ancilla resonator having an ancilla resonance frequency coupled to said command circuit for stabilizing an ancilla cat qubit and being non-linearly coupled via said command circuit to said data resonators. The command circuit is arranged to perform a quantum gate by:

> a) while stabilizing said ancilla cat qubit, applying a radiation having said ancilla resonance frequency such that said data resonators and said ancilla resonator are substantially simultaneously subject to a Hamiltonian resulting from said radiation having said ancilla resonance frequency,
> b) turning off said radiation having said ancilla resonance frequency after a chosen duration.

This system is advantageous because it allows faster syndrome measurements in QECCs and thus improve the performance of the error correction code used.

In various embodiments, this system may present one or more of the following features:

- said command circuit is further arranged to apply a dissipative stabilization to at least one said data resonators depending on time and on the state of the ancilla cat qubit during said operation a),
- said command circuit is further arranged to prepare said ancilla cat qubit with a state "|+>" or "|->" of the X operator prior to operation a), and to apply a measurement operation of operator X on said ancilla resonator after turning off said radiation having said ancilla resonance frequency, and
- said command circuit is arranged in operation a) to apply N radiations having said ancilla resonance frequency, such that the data resonators are substantially simultaneously subject to a respective Hamiltonian resulting from one of said N radiations, with an even number of said N radiations being chosen to have opposite amplitudes.

The invention also concerns a quantum system for performing a quantum correction error code comprising a command circuit for selectively applying radiation, a number J of data resonators, with J equal to or greater than two, each data resonator having a respective resonance frequency and being coupled to said command circuit for stabilizing a respective data cat qubit, and a number J-1 of ancilla resonators, each ancilla resonator having an ancilla resonance frequency coupled to said command circuit for stabilizing an ancilla cat qubit. Each of said J-1 ancilla resonators is non-linearly coupled to two respective data resonators of said J data resonators, and each data resonator of said J data resonator being connected at most to two ancilla resonators of said J-1 ancilla resonators, and said command circuit is arranged to perform J-1 quantum operations by:

> 1) for each ancilla resonator of said J-1 ancilla resonators, preparing an ancilla cat qubit in said each of said ancilla resonator of said J-1 ancilla resonators with a state "+" or "-" of the X operator,

2) for each ancilla resonator of said J-1 ancilla resonators, while stabilizing the ancilla cat qubit, applying a radiation having the ancilla resonance frequency of said each ancilla resonator to said command circuit such that the data resonators connected to said each ancilla resonator and said each ancilla resonator are substantially simultaneously subject to a Hamiltonian resulting from said radiation having the ancilla resonance frequency of said each ancilla resonator,

3) turning off said radiations having said ancilla resonance frequency of said each ancilla resonator, and

4) applying a measurement on operator X on said each ancilla resonator.

In various embodiments, this system may present one or more of the following features:

- the system is arranged to perform a first half of the J-1 quantum operations simultaneously said operations being performed for each data cat qubit on a single ancilla cat qubit to which it is non-linearly coupled, and to perform the second half of the J-1 quantum operations simultaneously on the remainder ancilla cat qubit thereafter,
- the system is arranged to perform the J-1 quantum operations substantially simultaneously, and
- the command circuit is arranged to repeat the J-1 quantum operations periodically.

The invention also concerns a method for performing a quantum gate between a number N of data resonators, with N equal to or greater than two, each data resonator having a respective resonance frequency and hosting a respective data cat qubit, and an ancilla resonator having an ancilla resonance frequency and hosting an ancilla cat qubit, said ancilla resonator being non-linearly coupled to said data resonators, comprising the following operations:

a) while stabilizing said ancilla cat qubit, applying a radiation having said ancilla resonance frequency such that said data resonators and said ancilla resonator are substantially simultaneously subject to a Hamiltonian resulting from said radiation having said ancilla resonance frequency,

b) turning off said radiation having said ancilla resonance frequency after a chosen duration.

In various embodiments, this method may present one or more of the following features:

- operation a) further comprises applying a dissipative stabilization to at least one said data resonators depending on time and on the state of the ancilla cat qubit,
- the method further comprises preparing said ancilla cat qubit with a state "+" or "-" of the X operator prior to operation a), further comprising c) applying a measurement operation of operator X on said ancilla resonator after operation b), and
- operation a) comprises applying apply N radiations having said ancilla resonance frequency, such that the data resonators are substantially simultaneously subject to a respective Hamiltonian resulting from a one of said N radiations, with an even number of said N radiations being chosen to have opposite amplitudes.

The invention also concerns a method for performing a quantum correction error code between a number J of data resonators, with J equal to or greater than two, each data resonator having a respective resonance frequency and hosting a respective data cat qubit, and a number J-1 of ancilla resonators, each ancilla resonator having an ancilla resonance frequency and hosting an ancilla cat qubit, each of said J-1 ancilla resonators being non-linearly coupled to two respective data resonators of said J data resonators, and each data resonator of said J data resonator being connected at most to two ancilla resonators of said J-1 ancilla resonators, said method comprising performing J-1 quantum operations by:

1) for each ancilla resonator of said J-1 ancilla resonators, preparing an ancilla cat qubit in said each of said ancilla resonator of said J-1 ancilla resonators with a state "+" or "-" of the X operator,

2) for each ancilla resonator of said J-1 ancilla resonators, while stabilizing the ancilla cat qubit, applying a radiation having the ancilla resonance frequency of said each ancilla resonator such that the data resonators connected to said each ancilla resonator and said each ancilla resonator are substantially simultaneously subject to a Hamiltonian resulting from said radiation having the ancilla resonance frequency of said each ancilla resonator,

3) turning off said radiations having said the ancilla resonance frequency of said each ancilla resonator, and

4) applying a measurement on operator X on said each ancilla resonator.

In various embodiments, this method may present one or more of the following features:

- a first half of the J-1 quantum operations are performed simultaneously for each data cat qubit on a single ancilla cat qubit to which it is non-linearly coupled, and in which the second half of the J-1 quantum operations are performed simultaneously on the remainder ancilla cat qubit thereafter, and
- the J-1 quantum operations are performed substantially simultaneously.

Other features and advantages of the invention will readily appear in the following description of the drawings, which show exemplary embodiments of the invention and on which:

- Figure 1 shows a generic diagram of a conventional CNOT gate between a data cat qubit and an ancilla cat qubit,
- Figure 2 shows a diagram explaining how the quantum gate of Figure 1 is executed,
- Figure 3 shows a diagram explaining the need for a compensation when a CNOT gate is performed,
- Figure 4 shows a generic diagram of a CXX gate between two data cat qubit and an ancilla cat qubit according to the invention,
- Figure 5 shows a diagram explaining how the quantum gate of Figure 4 is executed,
- Figure 6 shows a graph demonstrating the performance of the quantum gate of Figure 4,
- Figure 7 shows a diagram of a compensation scheme for the CXX gate of Figure 4,
- Figure 8 shows a generic diagram of a measurement quantum system using the quantum gate of Figure 4,
- Figure 9 shows a diagram explaining how the measurement quantum gate of Figure 8 is executed,
- Figure 10 shows a generic diagram of a first embodiment of a quantum error correcting code (QECC) using the measurement quantum system of Figure 8,
- Figure 11 shows a diagram explaining how the QECC of Figure 10 is executed,
- Figure 12 shows a graph demonstrating the performance of the QECC of Figure 10,
- Figure 13 shows a generic diagram of a second embodiment of a QECC using the measurement quantum system of Figure 8,
- Figure 14 shows a generic diagram of a CX^N gate between N data cat qubits and an ancilla cat qubit according to the invention,
- Figure 15 shows a diagram explaining how the quantum gate of Figure 15 is executed,
- Figure 16 shows a diagram of a compensation scheme for the CX^N gate of Figure 15,
- Figure 17 show a generic diagram of an execution scheme of a surface code implementing the CX^N quantum gate and/or the MX^N measurement operation according to the invention, and
- Figure 18 and 19 show a generic diagram of an execution scheme of a surface code implementing the CZ^N quantum gate and/or the MZ^N measurement operation according to the invention, and
- Figure 20 show a generic diagram of an execution scheme of a XZZX code implementing the CX^N quantum gate and/or the MX^N measurement operation according to the invention, and
- Figure 21 show a generic diagram of an execution scheme of a XZZX code implementing the CZ^N quantum gate and/or the MZ^N measurement operation according to the invention.

The drawings and the following description are comprised for the most part of positive and well-defined features. As a result, they are not only useful in understanding the invention, but they can also be used to contribute to its definition, should the need arise.

The invention concerns the realization of high-performance quantum gates in the context of cat qubits.

Stabilized cat qubits are known to benefit from a noise bias. More precisely, an effective error channel (e.g., bit errors or "bit-flips") is suppressed in an exponential way with the "size" - i.e., the average number of photons - of the Schrödinger cat states of the cat qubits.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

A cat qubit repetition code is made using d cat qubits (called data cat qubits), in which logical information is encoded. This is performed by repeatedly measuring quantum operators which reveal if some errors have occurred on the data cat qubits. This is done by using d-1 additional cat qubits (called ancilla cat qubits or ancillary cat qubits). The quantum circuitry of the repetition code requires preparation of the ancillary qubit in the state "+" - for a cat qubit, this is the Schrödinger cat state -, two CNOT gates between the ancillary cat qubits and the data cat qubits, and measurement of the Pauli X operator of the ancillary qubit - for a cat qubit, this is the photon number parity -.

The challenge in implementing this repetition code is to run the code on hardware which operates below a fault-tolerant error threshold. This means that the fidelity of the quantum operations in this circuit must be very high for the code to have a positive impact.

More precisely, when the repetition code is operated above the threshold, i.e., when the fidelity of the physical operations composing the repetition code is insufficient, the lifetime of the logical information decreases when the number of physical data qubits d increases: the new errors introduced by the addition of quantum systems are not compensated by the error correction strategy.

On the other hand, when the repetition code is operated under the error correction threshold, i.e., when the fidelity of the physical operations is sufficient, the lifetime of the logical information grows exponentially with the number d of data qubits (which is also called the distance d of the repetition code).

Several articles propose to use cat qubits in a QECC, either in a code entirely dedicated to phase error ("phase-flip"), or in a code that is much more tolerant of phase errors than of bit errors (such as a biased noise tailored code of the rectangular surface code type or of the XZZX surface code type). These solutions are described for instance in "Repetition Cat Qubits for Fault-Tolerant Quantum Computation" by Jérémie Guillaud and Mazyar Mirrahimi, Phys. Rev. X 9, 041053, 12/12//2019, "Bias-preserving gates with stabilized cat qubits" by Shruti et al, SCIENCE ADVANCES, Vol 6, Issue 34, 21/08/2020, "Error rates and resource overheads of repetition cat qubits" by Jérémie Guillaud and Mazyar Mirrahimi, Phys. Rev. A 103, 042413, 13/04/2021, "Building a Fault-Tolerant Quantum Computer Using Concatenated Cat Codes" by Christopher Chamberland et al; PRX Quantum 3, 010329, 23/02/2022, or "Practical Quantum Error Correction with the XZZX Code and Kerr-Cat Qubits" by Andrew S. Darmawan et al, PRX Quantum 2, 030345, 09/16/2021.

In all known implementation of a repetition code, the syndrome measurement (the result of the QECC's quantum operator measurement) used in QECCs necessitate two distinct timesteps, that is a first timestep to perform a first CNOT gate between a first qubit and an ancilla qubit, followed by a second timestep to perform a second CNOT gate between a second qubit and the ancilla qubit. When performing the measurement of an ancillary qubit for a QECC, there are two additional timesteps of preparing the ancillary qubit in a chosen state, prior to the CNOT gate steps, and measuring the state of the ancillary qubit, after the CNOT gate steps.

This scheme was developed a long time ago. Its principle relies on the fact that multi-qubit quantum gates can be realized using only two-qubit gates. In many architectures, realizing N-qubit gates becomes increasingly difficult with N, such that it is preferred to use only 2-qubit gates to synthesize N-qubit gates. In the case of the repetition code, realizing a cascade of two CNOT gates is preferred to performing a CXX gate. Incidentally, this approach is not restricted to CXX gates, but is generalized to any multi-qubit entangling gates between more than 2 qubits. In other words, when more than two quantum entities are set to interact, the go-to way to perform these multi-entities interactions is to perform multiple two-entities interactions.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

Recently, significant advances have been made with cat qubits. During its efforts to implement a QECC for cat qubits, the Applicant has used conventional quantum gates, but found them to cause issues which will be explained below.

By cat qubit is meant any implementation of a cat qubit, and in particular a two-photon dissipative Schrödinger cat qubit. Alternatively, other cat qubits may be used. In some embodiments, the data cat qubits and the ancilla cat qubits may be realized with distinct types of cat qubits.

Such cat qubits can be stabilized by the following exemplary schemes:

a) a dissipative stabilization, with jump operator $L = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a buffer mode b to the cat qubit and by engineering the Hamiltonian $H \propto a^2 b^\dagger$ where $b$ is the photon annihilation operator of mode b with a pump at frequency $2\omega_a - \omega_b$ and a drive on the buffer mode at frequency $\omega_b$. By way of reminder, the dissipative stabilization of two coherent states requires to engineer a non-linear conversion between two photons of a first mode a that hosts the stabilized quantum manifold, this mode is also called the cat qubit mode, and one photon of a second mode b known as buffer mode, and conversely. Such a stabilization scheme allows to suppress bit-flips exponentially with the number of photons in said two coherent states.

b) a Kerr Hamiltonian $H/\hbar = K(a^{\dagger 2} - \overline{\alpha^2})(a^2 - \alpha^2) - \Delta a^\dagger a$ where $K$ is the complex amplitude of the Kerr Hamiltonian, $a$ is the photon annihilation operator, and $\alpha$ is a complex number defining the cat qubit.

c) a detuned Kerr Hamiltonian $H/\hbar = K(a^{\dagger 2} - \overline{\alpha^2})(a^2 - \alpha^2) - \Delta a^\dagger a$, where $K$ is the complex amplitude of the Kerr Hamiltonian, $a$ is the photon annihilation operator, $\alpha$ is a complex number defining the cat qubit, and $\Delta$ is the detuning factor.

d) a two-photon exchange (TPE) Hamiltonian $H/\hbar = g(a^2 - \alpha^2)\sigma_+ + h.c$, where $g$ is the complex amplitude of the TPE Hamiltonian, $g$ is the photon annihilation operator, $\alpha$ is a complex number defining the cat qubit, and $\sigma_+$ is the raising operators of the two-level buffer system.

e) a dissipative squeezing stabilization with jump operator $L_2 = \sqrt{\kappa_2}\Big(\big(cosh(r)a +$
$$sinh(r)e^{i\theta}a^\dagger\big)^2 - \big(cosh(r)\alpha + sinh(r)e^{i\theta}\overline{\alpha}\big)^2\Big)$$
where $\kappa_2$ is the two-photon dissipation rate, $a$ is the photon annihilation operator, $\alpha$ is a complex number defining the cat qubit, and $\xi = re^{i\theta}$ is the complex squeezing parameter. This stabilizes "squeezed cat qubits" which are also referred to as displaced squeezed vacuum states. This jump operator can be realized by coupling a buffer mode b (with decay rate $\kappa_b$) to the cat qubit, and by engineering a coupling Hamiltonian $g(L_2 b^\dagger + h.c.)$, with $\kappa_b >> g$.

The above schemes a) to e) can be adapted to be made conditional on an ancilla qubit state.

The theoretical realization of CNOT gates between two stabilized cat qubits in modes $a_1$ and $a_2$ relies on the use of the following three ingredients:

1) the performance of a dissipative stabilization on the control qubit $a_1$, with the jump operator $L_c = \sqrt{\kappa_2}(a_1^2 - \alpha^2)$, where $a_1$ is the photon annihilation operator of mode $a_1$ and $\alpha$ is a complex number defining the cat qubit, or one of the stabilization schemes described above,

2) the addition in the circuit of a 'feedforward' Hamiltonian, also called the 'CNOT' Hamiltonian or 'longitudinal' Hamiltonian with the formula $H_{CX}/\hbar = g_{CX}\big(a_1 + a_1^\dagger - 2\alpha\big)\big(a_2^\dagger a_2 - \alpha^2\big)$, where $g_{CX}$ is the complex amplitude of the Hamiltonian, $a_1$ is the photon annihilation operator of mode $a_1$, $a_2$ is the photon annihilation operator of mode $a_2$, and $\alpha$ is a complex number defining the cat qubit,

3) the performance of a dissipative stabilization on the target qubit $a_2$ which depends on the state of the control qubit $a_1$, with the jump operator $L_t(t) = \sqrt{\kappa_2}\left(a_2^2 - \frac{1}{2}\alpha(a_1 + \alpha) + \frac{1}{2}\alpha e^{\frac{i2\pi}{T}t}(a_1 - \alpha)\right)$, where $\kappa_2$ is the two-photon dissipation rate, $a_1$ is the photon annihilation operator of mode $a_1$, $a_2$ is the photon annihilation operator of mode $a_2$, and $\alpha$ is a complex number defining the cat qubit, or one of the stabilization schemes a) to e) described above in a form adapted to be made conditional on an ancilla qubit state.

The best theoretical implementation uses the 3 above ingredients. However, the experiments of the Applicant have revealed that the two first ingredients offer a good compromise between the ease of realization and quality of the results.

Ingredient 3, when applied, replaces the conventional stabilization performed on the target qubits to stabilize the cat states. If ingredient 3 is absent, the target qubits are not subject to any stabilization of the cat states while the ingredients for performing the gate are applied. The same will apply all of the embodiments described below: during a gate operation or a measurement operation, the stationary stabilization of the target cat qubits is turned off, and it may be replaced by ingredient 3 during a gate operation.

Indeed, although in theory, one can realize a CNOT gate without the feedforward Hamiltonian and only the ingredients 1 and 3, in practice the CNOT gate fidelity is poor without this term, such that it is crucial to implement the ingredient 2).

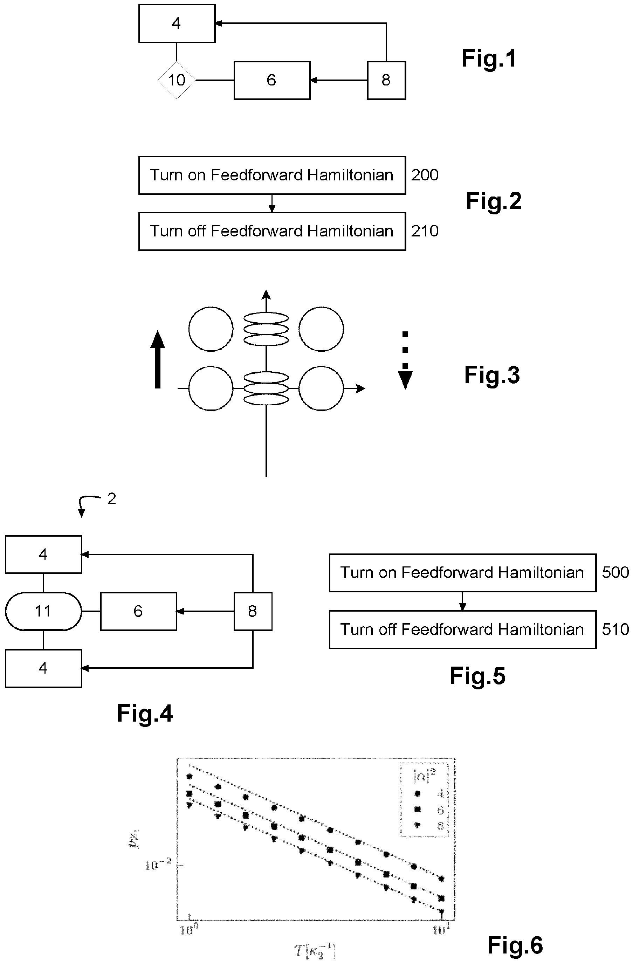

Figure 1 shows a generic diagram of a conventional CNOT gate. On this figure, a data cat qubit 4 and an ancilla cat qubit 6 both controlled via a command circuit 8 are connected together by CNOT gate 10.

Generally speaking, cat qubits are resonant modes which are stabilized in a specific circuit which receives specific radiation controlled by a command circuit. As a result, a cat qubit can be generally designated as a resonator having a specific resonance frequency (which is the frequency of the cat qubit) which is controlled by the command circuit. Each cat qubit can be controlled by a specific command circuit, or a single circuit can be arranged to control all of the cat qubits of a given circuit. In the example described herein, a single command circuit 8 controls all of the data cat qubits 4 and the ancilla cat qubit 6. Furthermore, cat qubits can be referred to as "modes" when referring to the resonator in which they are encoded.

Figure 2 shows a block diagram of the operation of the CNOT gate (also called CX gate). In a first operation 200, the feedforward Hamiltonian (ingredient 2) is turned on and the stabilization on the data cat qubit 4 is turned off. Ingredient 1 is always applied as the ancilla cat qubit 6 needs to be stabilized. Alternatively, operation 200 could comprise turning on the feedforward Hamiltonian (ingredient 2) and the time dependent dissipation on the data cat qubit (ingredient 3), or only activating the time dependent dissipation on the data cat qubit (ingredient 3). After a chosen duration for operation 200, which is the gate duration and which will be discussed below, the feedforward Hamiltonian (or its variations of operation 200) is turned off in an operation 210 and the stabilization on data cat qubit 4 is restored.

The stabilization on the ancilla and data cat qubits can be performed using one of the five stabilizations described above.

The first works of the Applicant revealed that the means used to engineer the feedforward Hamiltonian also introduce an extremely strong deterministic spurious effect, such that it is indispensable to remove this deterministic spurious effect to achieve any result.

More precisely, when developing the terms of the feedforward Hamiltonian, the term $-2\alpha\left(a_2^\dagger a_2\right)$ is a detuning on the data cat qubit, and does not need to be physically implemented, but rather can be done in software by redefining $\alpha$ of the data cat qubit, while the term $-\alpha^2 g_{CX}\left(a_1 + a_1^\dagger\right)$ is a linear displacement of the ancilla cat qubit that is routinely achieved.

The entangling part of the interaction; that is the most difficult to realize is $g_{CX}\left(a_1 + a_1^\dagger\right)a_2^\dagger a_2$. Usually, the modes $a_1$ and $a_2$ are neighbors on the chip and both participate in a non-linear circuit element (typically, an asymmetrical threaded superconducting quantum interference device or "ATS", as described in the article *"Exponential suppression of bit-flips in a qubit encoded in an oscillator"*, Lescanne R. et. Al., Nature Physics, 2020) such that this term may be directly driven via a pump $\varepsilon_p(t) = \varepsilon_p cos(\omega_1 t)$. However, applying a pump at this frequency induces a linear drive on the ancilla cat qubit $a_1$ that needs to be exactly compensated.

Figure 3 shows this effect on the Wigner function of the ancilla cat qubit. When stabilized and in the absence of the feedforward Hamiltonian, the Wigner distribution of the ancilla cat qubit is shown on the easting axis. When the feedforward Hamiltonian is applied, it induces a displacement as shown by the full arrow, which in combination with stabilization the ancilla cat qubit results in decoherence and/or leakage out of the cat qubit code space. Hence, a compensation needs to be engineered as shown with the dotted arrow. This can be done by example by turning on a resonant drive on the ancilla cat qubit such that it compensates exactly the effect of the pump realizing the entangling part of the feed-forward Hamiltonian.

While this compensation is achievable, it becomes a burden when several CNOT gates are performed, as multiple need to be engineered more or less simultaneously without adversary effects.

The Applicant, in trying to find a solution to properly implementing the feedforward Hamiltonian, discovered that the "N-1 interaction between two quantum entities" paradigm could, contrary to all expectations, be improved on, and that a CNOTNOT gate could be directly implemented without resorting to sequential CNOT steps.

More specifically, the Applicant has found a way of reducing the cycle time of error correction when its gate is used to implement a measurement of quantum operators in the context of a quantum error correcting code, thereby improving its performance (threshold) as will be demonstrated below. As a further advantage, the Applicant has found that this can be done while solving the problem of the compensation for the feedforward Hamiltonian.

Figure 4 depicts a general diagram of a quantum system for performing a CNOTNOT quantum gate 2 according to the invention. In the following, the expression "CNOTNOT gate", "CNOTNOT quantum gate", "CXX gate" or "CXX quantum gate" can be used interchangeably. Further below, the same will be true for the expressions "MNOTNOT operation", "MNOTNOT quantum operation", "MXX operation" or "MXX quantum operation".

In the example described here, a quantum system 2 for performing a CXX gate links two data cat qubits 4 and one ancilla cat qubit 6. In the context of the invention, "data cat qubit" and "target qubit" are interchangeable and designate physical qubits which data is sought to be known, controlled or corrected. In the same way, "control cat qubit" and "ancilla cat qubit" are interchangeable and designate physical qubits which are used to read the photon parity of the data cat qubits for the above-mentioned purposes. In other words, by data cat qubit, it is meant that this physical qubit contains the quantum information that a QECC seeks to protect. By ancilla cat qubit, it is meant the complement of the data cat qubit in the QECC, i.e., this physical qubit is used to detect errors of the data cat qubit.

The theoretical realization of CXX gates between three stabilized cat qubits in modes $a_1$ and $a_2$ and $a_3$ relies on the use of the following three ingredients:

1) the performance of a dissipative stabilization on the control qubit $a_1$, with the jump operator

$$L_{c_1} = \sqrt{\kappa_2}(a_1^2 - \alpha^2)$$

, where $a_1$ is the photon annihilation operator of mode $a_1$ and $\alpha$ is a complex number defining the ancilla cat qubit,

2) the addition in the circuit of a 'feedforward' Hamiltonian, also called the 'CXX' Hamiltonian with the formula ,

$$H_{CXX}/\hbar = \frac{\pi}{4\alpha T}\left(a_1 + a_1^\dagger - 2\alpha\right)\left(a_2^\dagger a_2 - a_3^\dagger a_3\right)$$

where $T$ is the CXX gate duration, $a_1$ is the photon annihilation operator of the ancilla cat qubit 6 and $a_2$ and $a_3$ are the photon annihilation operator of the data cat qubits, and $\alpha$ is a complex number defining the cat qubit. For simplicity, the photon populations of the ancilla and data cat qubits are taken equal but they can be different: $\alpha_1^2$ for $a_1$, $\alpha_2^2$ for $a_2$, $\alpha_3^2$ for $a_3$. The feedforward Hamiltonian can be engineered with a pump at frequency $\omega_{a_1}$ and acts as a pull force and on the data cat qubits 4. During the application of this feedforward Hamiltonian, the stabilization on data cat qubit 4 is turned off.

3) one or more dissipative stabilization which acts as a drag force on one or both the data cat qubits 4 which depends on the state of the ancilla cat qubit $a_1$ can be used, with the jump operators

$$L_{t_2} = \sqrt{\kappa_2}\left(a_2^2 - \frac{1}{2}\alpha(a_1 + \alpha) + \frac{1}{2}\alpha e^{\frac{2i\pi}{T}t}(a_1 - \alpha)\right)$$

and $L_{t_3} =$

$$\sqrt{\kappa_2}\left(a_3^2 - \frac{1}{2}\alpha(a_1 + \alpha) + \frac{1}{2}\alpha e^{\frac{2i\pi}{T}t}(a_1 - \alpha)\right)$$

. The jump operator $L_{t_2}$ and $L_{t_3}$ can be realized by providing respective buffer modes $b_2$ and $b_3$ for the data cat qubits 4 and engineering the Hamiltonian

$$H/\hbar = g_{2b}a_2^2 b_2^\dagger + g_{1b}a_1 b_2^\dagger + h.c.$$

and pumps at frequency $2\omega_{a_2} - \omega_{b_2}$ and $\frac{1}{2}\left(\omega_{a_1} - \omega_{b_2}\right)$ and a drive at frequency $\omega_{b_2}$. The same can be done for jump operator $L_{t_3}$ by replacing $a_2$ and $b_2$ by $a_3$ and $b_3$ in the above equations.

The best implementation theoretically uses the 3 ingredients. However, the experiments of the Applicant have revealed that the two first ingredients offer a good compromise between the ease of realization and quality of the results. As in the case of a CNOT gate described above, the stabilization schemes 1) and 3) can be implemented with any of the five stabilization schemes mentioned above.

As shown on this figure, the two data cat qubits 4 are connected to the ancilla cat qubit 6 via a CXX gate 11. However, contrary to the prior art which uses two sequential CNOT gates, there is a single CXX gate 11, and, as shown, both data cat qubits 4 are connected simultaneously to the CXX gate 11, such that the CXX gate is performed simultaneously on both data cat qubits 4.

Figure 5 shows a block diagram of the operation of the CXX gate of Figure 4. In a first operation 500 which consists the feedforward Hamiltonian (ingredient 2) is turned on on both data cat qubits 4 and the ancilla cat qubit 6. Ingredient 1 is always applied as the ancilla cat qubit needs to be stabilized, but the stabilization on data cat qubits 4 is turned off. Alternatively, operation 500 could comprise turning on the feedforward Hamiltonian (ingredient 2) and the time dependent dissipation $L_{t_2}$ and $L_{t_3}$ on the data cat qubits (ingredient 3), or only activating the time dependent dissipation $L_{t_2}$ and $L_{t_3}$ on the data cat qubits (ingredient 3). After a chosen duration for operation 500, which is the gate duration and which will be discussed below, the feedforward Hamiltonian (or its variations of operation 500) is turned off in an operation 510 and the stabilization of data cat qubits 4 is restored.

In order to demonstrate that the CXX strategy leads to better overall performance, the analytical errors of a CXX gate will be computed and compared below to the performance of two consecutive CX gates, and this analytical computation will be checked using numerical simulations shown in Figure 6.

For the following demonstration, the CXX gate is again considered to be realized between 3 cat qubits whose modes are given by $a_1$, $a_2$ and $a_3$. Qubits $a_2$ and $a_3$ are the target qubits 4 and $a_1$ is the control qubit. The CXX gate between the three cat qubits can be realized by the master equation

$$\frac{d\rho(t)}{dt} = \kappa_2\left[D[a_1^2 - \alpha^2] + D[L_2(t)] + D[L_3(t)]\right]\rho(t) +$$

$$\kappa_1\big[D[a_1] + D[a_2] + D[a_3]\big]\rho(t) - i[H, \rho(t)]$$ where $a\_1$, $a_2$ and $a_3$ are the annihilation operators of the control and the two target qubits, respectively, $L_{2(t)} = a_2 - a^2 + \frac{\alpha}{2}\big(e^{2i\frac{\pi}{T}t} - 1\big)(a_1 - \alpha)$, $L_{3(t)} = a_3 - \alpha^2 + \frac{\alpha}{2}\big(e^{2i\frac{\pi}{T}t} - 1\big)(a_1 - \alpha)$, and $H/\hbar = \frac{\pi}{4\alpha T}\big(a_1 + a_1^\dagger - 2\alpha\big)(a_2^\dagger a_2 - a_3^\dagger a_3)$.

In cat qubit architectures, the quality of the hardware is measured by the ratio of two time scales: time $1/\kappa_2$, where $\kappa_2$ is the two-photon dissipation rate that stabilizes the qubit; and time $1/\kappa_1$, where $\kappa_1$ is the one-photon loss rate. There are other sources of errors such as the phase shift at the rate $\kappa_\phi$, thermal excitations, self-Kerr and cross-Kerr interactions, or other undesirable couplings with other quantum systems present in the vicinity of the memory, etc.

Nevertheless, the one-photon loss is the dominant error mechanism and for the sake of clarity, only this physical error mechanism is considered in what follows. In general, all that follows is valid by replacing the ratio $\kappa_1/\kappa_2$ by the sum of the rates of the error mechanisms divided by $\kappa_2$.

To analyze the master equation, a hybrid basis is used in which the control qubit is described by the shifted Fock basis and the two target qubits are described by the usual Fock basis. The Hamiltonian can be expressed as follows:

$$H/\hbar = \frac{-\pi}{T}|1\rangle\langle1| \otimes \big(a_2^\dagger a_2 - a_3^\dagger a_3\big) + \frac{\pi}{4\alpha T}Z_1 \otimes \big(b_1 + b_1^\dagger\big)\big(a_2^\dagger a_2 - a_3^\dagger a_3\big)$$

In the rotating frame, and in the full shifted Fock basis, the master equation is given by:

$$\frac{d\rho_I(t)}{dt} = \kappa_2\Big[D\big[I_{1,2} \otimes (b_1^2 + 2\alpha b_1)\big] + D[L_2'(t)] + D[L_3'(t)]\Big]\rho_I(t)$$

$$+ \kappa_1\Big[D[Z_1 \otimes (b_1 + \alpha)] + D\Big[Z_1\Big(\frac{\pi}{T}t\Big)Z_2 \otimes (b_2 + \alpha)\Big]$$

$$+ D\Big[Z_1\Big(\frac{\pi}{T}t\Big)Z_3 \otimes (b_3 + \alpha)\Big]\Big]\rho_I(t)$$

$$- i\Big[\frac{\pi}{4\alpha T}Z_1$$

$$\otimes \big(b_1 + b_1^\dagger\big)\big(b_2^\dagger b_2 + \alpha(b_2 + b_2^\dagger) + b_3^\dagger b_3 + \alpha(b_3 + b_3^\dagger)\big), \rho_I(t)\Big]$$

where the jump operators on the target qubits are given by $L_2'(t) = Z_1\Big(\frac{2\pi}{T}t\Big) \otimes (b_2^2 + 2\alpha b_2) + \frac{\alpha}{2}\big(e^{2i\frac{\pi}{T}t} - 1\big)Z_1 \otimes b_1$, and $L_3'(t) = Z_1\Big(\frac{2\pi}{T}t\Big) \otimes (b_3^2 + 2\alpha b_3) + \frac{\alpha}{2}\big(e^{2i\frac{\pi}{T}t} - 1\big)Z_1 \otimes b_1$.

By only considering the first excited state in each of the three qubits, ignoring internal couplings and neglecting the last term of both target jump operators, the master equation becomes:

$$\frac{d\rho_I(t)}{dt} = 4\kappa_2\alpha^2 \left[ D[I_{1,2,3} \otimes b_1] + D\left[Z_1\left(\frac{2\pi}{T}t\right) \otimes b_2\right] + D\left[Z_1\left(\frac{2\pi}{T}t\right) \otimes b_3\right] \right]\rho_I(t)$$
$$+ \kappa_1\alpha^2$$

By adiabatically eliminating the excited states, the following master equation is obtained:

$$\frac{d\rho_{I,g}(t)}{dt} = \kappa_1\alpha^2 \left[ D[Z_1] + D\left[Z_1\left(\frac{\pi}{T}t\right)Z_2\right] + D\left[Z_1\left(\frac{\pi}{T}t\right)Z_3\right] \right]\rho_I,g(t)$$
$$+ \frac{\pi^2}{16\kappa_2\alpha^2T^2}D\left[Z_1Z_1\left(\frac{2\pi}{T}t\right)\right]$$

By integrating from 0 to time T and ignoring higher order terms, this equation yields:

$$\rho_I,g(T) \simeq \rho_g(0)$$
$$+ \int_0^T dt \left( \kappa_1\alpha^2 \left[ D[Z_1] + D\left[Z_1\left(\frac{\pi}{T}t\right)Z_2\right] + D\left[Z_1\left(\frac{\pi}{T}t\right)Z_3\right] \right] \right.$$
$$\left. + \frac{\pi^2}{16\kappa_2\alpha^2T^2}D\left[Z_1Z_1\left(\frac{2\pi}{T}t\right)\right] \right)\rho_g(0)$$

By going back to the initial frame and removing the unitary perfect CXX, the error channel of CXX can be obtained:

$$N_{CXX'}(\rho) \simeq \rho \int_0^T dt \left( \kappa_1\alpha^2 \left[ D[Z_1] + D\left[Z_1Z_1\left(\frac{\pi}{T}t\right)Z_2\right] + D\left[Z_1Z_1\left(\frac{\pi}{T}t\right)Z_3\right] \right] \right.$$
$$\left. + \frac{\pi^2}{16\kappa_2\alpha^2T^2}D\left[Z_1Z_1\left(\frac{2\pi}{T}t\right)\right] \right)\rho$$

By performing the integrating and focusing on diagonal terms the Z error rates of CXX are given by

$$\overline{p_{Z_1}} = \kappa_1\alpha^2T + \frac{\pi^2}{32\kappa_2\alpha^2T}$$ (where the second term corresponds to non-adiabatic errors) and

$$\overline{p_{Z_2}} = \overline{p_{Z_1Z_2}} = \overline{p_{Z_3}} = \overline{p_{Z_1Z_3}} = \frac{1}{2}\kappa_1\alpha^2T$$ .

Figure 6 shows the simulation of a quantum circuit using a quantum gate according to Figure 4 compared to the non-adiabatic error determined above. In small dashed lines, the value $\overline{p_{Z_1}}$ is plotted as a function of the invert of $\kappa_2$ for various values of $\alpha^2$. For each value of $\alpha^2$, simulation error levels are plotted for specific values of $\kappa_2$ (as circles, triangles and squares). This figure shows that the non-adiabatic error determined theoretically is expected to be met in real-life implementations and the error budget calculations below proves the advantage mentioned above. In this simulation, $\kappa_1$ is set to 0 as its effect is well understood and does not need to be checked.

To concretely evaluate the gain associated to the use of the CXX gate according to the invention, a comparison of the error budgets with two CNOT gates in series will now be offered. The total time to realize the CXX or the two CNOT gates in series is fixed at T. In the following, $\bar{n} = |\alpha|^2$ is the average photon number in the cat states. * CNOT gates in series error budget

The error on the ancilla qubit is given by $\overline{n}\kappa_1 T + 4\,\dfrac{\pi^2}{64\overline{n}\kappa_2 T}$

The errors on the two data qubits are given by $\dfrac{3}{2}\overline{n}\kappa_1 T$

The correlated errors between the data and ancilla qubits are given by $\dfrac{1}{2}\overline{n}\kappa_1 T$

As a result, the total error is given by $3\overline{n}\kappa_1 T + \dfrac{\pi^2}{16\overline{n}\kappa_2 T}$ * CXX gate error budget

The error on the ancilla qubit is given by $\overline{n}\kappa_1 T + \dfrac{\pi^2}{32\overline{n}\kappa_2 T}$

The errors on the two data qubits are given by $\overline{n}\kappa_1 T$

The correlated errors between the data and ancilla qubits are given by $\overline{n}\kappa_1 T$

As a result, the total error is given by $3\overline{n}\kappa_1 T + \dfrac{\pi^2}{32\overline{n}\kappa_2 T}$

Thus, for any time T, the CXX error budget is smaller than the two CNOT gates in series error budget.

This means that the CXX gate according to the invention can be done either faster with the same error as two CNOT gates performed slower, or it can be done in the same time as two CNOT gates performed but with a better fidelity.

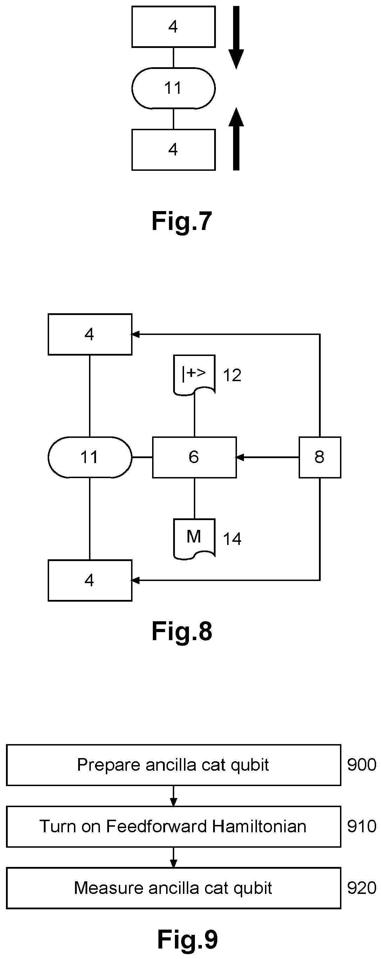

Another advantage of implementing CXX in a single step instead of using two consecutive CNOT gates is that the compensation problem mentioned above can be solved by choosing specific phase arrangement for the feedforward Hamiltonian. More precisely, any Hamiltonian of the form $H_{CX}/\hbar = g_{CX}\left(a_1 + a_1^\dagger - 2\alpha\right)\left(a_2^\dagger a_2 \pm a_3^\dagger a_3\right)$ produces the desired effect. The Applicant has discovered for the specific case of the "-" sign in the last term of the Hex formula, the undesired displacement generated by the respective terms $\left(a_1 + a_1^\dagger\right)\left(a_2^\dagger a_2\right)$ and $\left(a_1 + a_1^\dagger\right)\left(a_3^\dagger a_3\right)$ of the feedforward Hamiltonian (as explained with Figure 3) exactly compensate each other, as shown on Figure 7, such that it is not anymore necessary to engineer a compensation. In practice, due to experimental imperfections, a very small compensation may still be needed but, because most of it has been already cancelled, it is much easier to engineer.

In alternative embodiments, compensation can be engineered as known conventionally.

Figure 8 shows a generic diagram of the XX syndrome measurement using the CXX quantum gate of Figure 4. The system of Figure 8 is very similar to that of Figure 4, with the exception that it comprises a control qubit preparation 12 and a control qubit measurement 14.

By providing these elements, the measurement of the ancilla cat qubit 6 allows to measure the joint photon number parity between the data cat qubits 4 (which is the stabilizer of a repetition code on two-components cat qubits). Incidentally, the measurement operation of the invention, like the CXX gate is not limited to the "XX" measurement. In other words, another gate performed with the same structure (that is a simultaneous CNOT gate) but labelled differently due to specific conventions would still be within the scope of the invention. Hence the CXX wording is meant to be more easily understood in view of the existing standards, but the invention really aims at a gate which flips the state of the control depending on the joint photon number parity of the targets being odd. The same applies to MXX for any measurement operation relying on a CXX gate or its equivalent.

Figure 9 shows a block diagram of the execution of the measurement operation of Figure 8. It is similar to Figure 5 except that operation 900 of preparing the ancilla cat qubit 6 in the " +" state precedes the feedforward Hamiltonian of operation 910 which is followed by an operation 920 of measuring the ancilla cat qubit 6. In operation 910, the conditional dissipation stabilizations $L_{t_2}$ and $L_{t_3}$ are also turned on simultaneously if the embodiment makes use of them. In operation 900, the control qubit 6 could also be prepared in the $| -\rangle$ state.

As a result, Figure 9 shows that the operation of the XX syndrome measurement according to the invention is performed in three timesteps, whereas the conventional XX syndrome measurement requires four timesteps due to the sequential CNOTs. The advantages achieved by gaining one timestep has been demonstrated above.

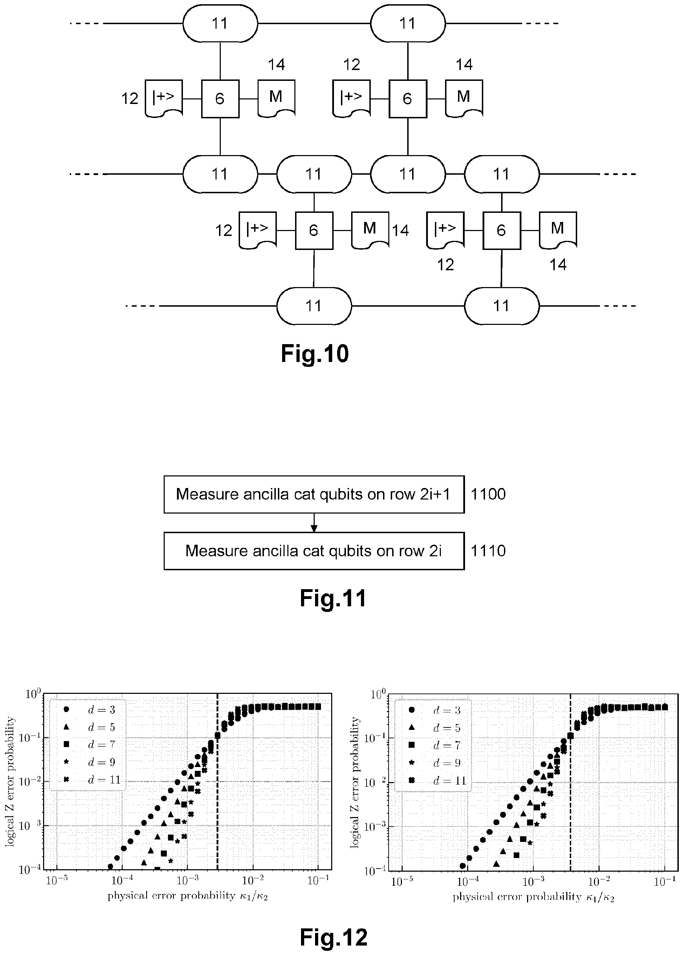

Figure 10 shows a general timeline of a QECC using the measurement operation of Figure 8. For simplicity's sake, only the ancilla cat qubit 6, its preparation 12 and its measurement 14 are shown. The command circuit 8 and the data cat qubits 4 are voluntarily left out and the data cat qubits are suggested by the lines with the MXX operations.

When two operations 11 are vertically aligned, this means that the operations are simultaneous. When they are offset vertically, this means that they are offset in time and one is performed before the other. As explained above, performing the MXX operation is made by turning on the corresponding feedforward Hamiltonian while turning off the regular stabilization on data cat qubits 4 (and possibly the corresponding conditional dissipation stabilizations).

The QECC according to the invention is set up such that each data cat qubit 4 is connected via a respective MXX operation to two distinct ancilla cat qubits 6, except for the data cat qubits 4 located at the ends of the QECC. The code shown on Figure 10 has a distance of 3. In an alternative embodiment, the data cat qubits 4 can be arranged in circle, such that all of the data cat qubits 4 are connected to two distinct ancilla cat qubits 6.

While Figure 10 shows the example of a distance 3 QECC, the QECC may have a greater distance such as 5 or more. In this case, the MXX operations are made simultaneous on an alternate scheme. This means that at first timestep, an MXX operation is performed for each data cat qubit, but in connection to a single one of the ancilla cat qubit to which it is non-linearly coupled. After this first timestep, MXX operations are performed on the remainder ancilla cat qubit.

Starting from Figure 10, with a distance 5 QECC, this would mean that the next row of ancilla cat qubits would be aligned with the first row of ancilla cat qubits, and the last row of ancilla cat qubit would be aligned with the second row of ancilla cat qubits.

Figure 11 shows a block diagram of the operation of the QECC of Figure 10 with a distance J. In operation 1100, an MXX operation is performed for each ancilla cat qubit having an uneven row number (2i+1). Then, in operation 1110, MXX operation is performed for each ancilla cat qubit having an even row number 2i.

Figure 12 represents two charts comparing the performance of a conventional QECC (on the left) versus that of a QECC according to the invention (on the right). In QECC design assessment, the error fault-tolerant threshold can be seen as the easting axis for which the error improves as the code distance rises.

In the case of Figure 12, cat qubits with 8 photons are used and it is assumed that all operations take the same time $1/\kappa_2$. The logical Z error is plotted as a function of $\kappa_1/\kappa_2$ for different distance of the code. On the left-hand side, two CNOT gates are used to detect Z errors, on the right-hand side, a CXX gate is used. The threshold is increased by about 25%, from 0.289 to 0.366 which is significant.

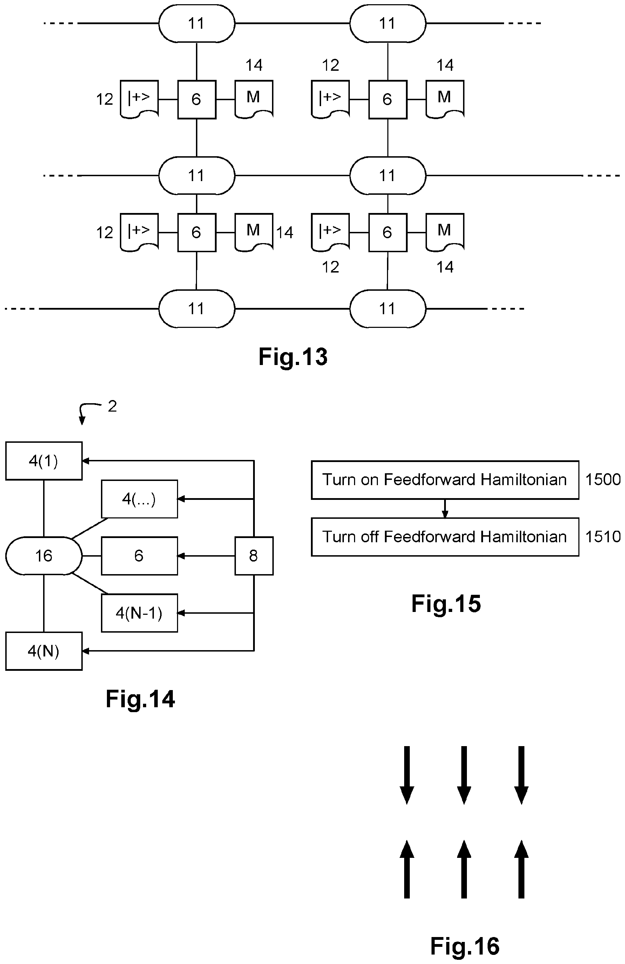

Figure 13 shows a less preferred alternative of the QECC code of Figure 10. In this embodiment, all of the CXX operations 11 are simultaneous. While this may look preferable at first sight, it actually causes potential disadvantages compared to the embodiment of Figure 10 when implemented in the real world.

This will be proved starting by distinguishing two implementation cases. In the first implementation case, the CXX gate is realized using ingredient 1 and 2. In the second implementation case, the CXX is also realized using ingredient 3.

In the first implementation case, the sequence showed in Figure 13 is technically achievable. However, the fact that the data cat qubits act as a target qubit of two ancilla qubits causes some problems. The reason for this is that this first implementation case requires turning on drives to obtain the feedforward Hamiltonians at two different frequencies (those of the two different ancilla cat qubits). If several drives at different frequencies are turned on together, there is a risk of crosstalk, frequency crowding, as well as the necessity to drive each feedforward Hamiltonian with a lower amplitude to prevent providing excess energy to the circuit which would risk raising its temperature.

The Applicant has determined that it is best at this stage to use offset feedforward Hamiltonians each with full power. Thus, the embodiment of Figure 10 is preferred.

In the second implementation case (adding ingredient 3), with the current implementation of the CXX described above, it is impossible to perform two CXX gates simultaneously acting on the same data qubit. To do this it would require a much more difficult dissipation which the Applicant does not yet know how to engineer. Thus, the embodiment of Figure 10 is yet again preferred.

While the embodiment of Figures 4 to 6 has been made with only two data cat qubits, the Applicant has discovered that the CXX can be made a CX^N by using N data cat qubits, each connected to the same ancilla cat qubit. Like the CXX, the CX^N can be realized in a single timestep. Figure 14 shows a generic diagram of the CX^N gate. The data cat qubits 4(1) to 4(N) are connected to the ancilla cat qubit 6 via a CX^N gate 16.

Figure 15 shows a block diagram of the operation of the CX^N gate of Figure 14. In a first operation 1500 which consists in turning on N feedforward Hamiltonian (ingredient 2) on each data cat qubit 4(1) to 4(N) and the ancilla cat qubit 6. Ingredient 1 is always applied as the ancilla cat qubit needs to be stabilized. Alternatively, operation 1500 could comprise turning on the feedforward Hamiltonian (ingredient 2) and the time dependent dissipation $L_{t_1}$ to $L_{t_N}$ on the data cat qubits (ingredient 3), or only activating the time dependent dissipation $L_{t_1}$ and $L_{t_N}$ on the data cat qubits (ingredient 3). After a chosen duration for operation 1500, which is the gate duration and which will be discussed below, the feedforward Hamiltonian (or its variations of operation 1500) is turned off in an operation 1510.

The phases of the pumps to turn on the N feedforward Hamiltonians can be chosen so that no compensation is needed. Figure 16 shows a possible compensation scheme, where the pumps of the N feedforward Hamiltonians are chosen so that the drives are exactly compensated on the ancilla cat qubit, as shown by the arrows on the figure. In the case that the feedforward Hamiltonians all have the same amplitude, and referring to the description of Figure 7, this comes down to the number of feedforward Hamiltonians being in the "+" case equaling the number of feedforward Hamiltonians being in the "-" case, as a possible example

$$H_{CX^N}/\hbar = g_{CX^N}\left(a_1 + a_1^\dagger - 2\alpha\right)\left(a_2^\dagger a_2 - a_3^\dagger a_3 + \cdots + \ a_N^\dagger a_N - a_{N+1}^\dagger a_{N+1}\right)$$ where the alternating signs ensure the compensation. Even if the amplitudes are not strictly equal, at the first order of analysis, the phase compensation scheme yields excellent results. In the case where N is odd, a solution is that an even number of feedforward Hamiltonians cancel each other out, and a single (or more) conventional compensation is engineered.

A CZ^N gate can also be realized in one timestep instead of using N CZ gates in series. It is reminded that CZ gates are simply realized with the dissipation on the data and ancilla cat qubits unchanged and a so-called beam splitter Hamiltonian $H = a^\dagger b + b^\dagger a$ turned on with a pump at frequency $\omega_a$ - $\omega_b$. Unlike the CNOT gate, this pump does not induce a deterministic spurious effect on the control qubit so no compensation is needed.

While the above has focused on the repetition code case, the CX^N gate and the MX^N operation of the invention can be generalized to all codes that realize X or Z stabilizer measurement. The following will show how they can be applied to the surface code and the XZZX code.

The surface code includes the measure of weight-4 X stabilizers and weight-4 Z stabilizers done sequentially. In the state-of-the-art implementation, both the X stabilizer measurement and the Z stabilizer measurement are performed with 4 gates done in parallel in 4 timesteps.

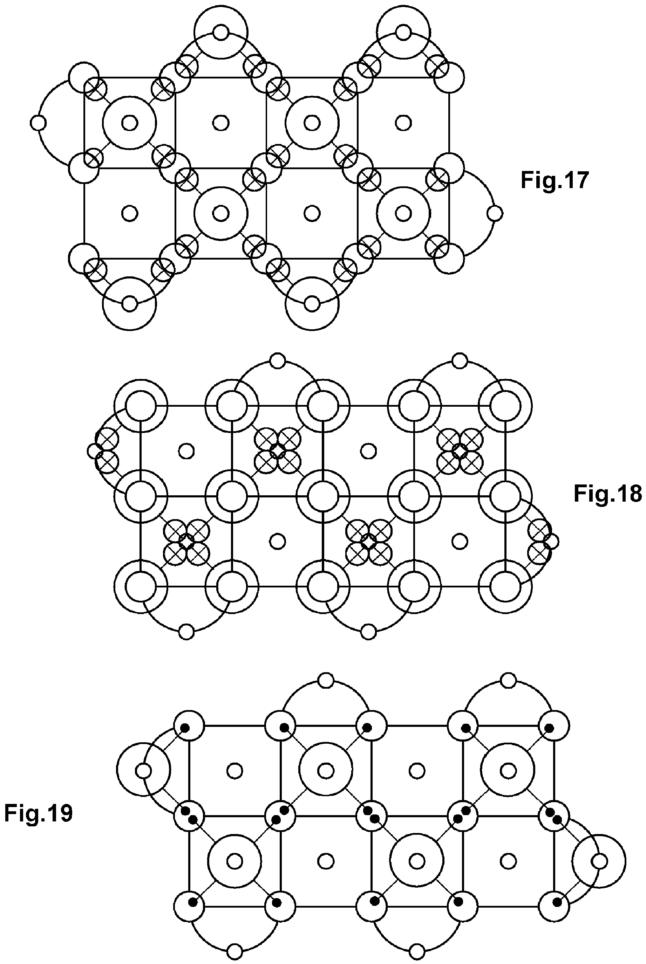

Figure 17 shows the realization of the X stabilizer measurement using CX$^4$ (and CX$^2$ at the frontier) gates. If the CNOT gate embodiment only uses the feedforward Hamiltonian and the dissipation on the ancilla cat qubit (that is ingredient 1 and ingredient 2), then the X stabilizer measurement can be realized in a single timestep. If the CNOT gate is realized with a time dependent dissipation on the data cat qubit (ingredient 3), two timesteps are needed.

On this figure, the data cat qubits are designated by medium size circles connected by a CNOT sign (the circle with a cross indicating that the data cat qubit plays a target role) to an ancilla cat qubit designated by a small circle (the big circle surrounding the small circles indicating that the ancilla cat qubit plays a control role). This shows that half of the ancilla cat qubits remain inactive, as they are used for by Z stabilizers.

Figure 18 shows a first realization of the Z stabilizer measurement using CXX (and CX at the frontier) gates. If the embodiment of the CNOT gate only uses the feedforward Hamiltonian and the dissipation on the ancilla cat qubit (that is ingredient 1 and ingredient 2), the Z stabilizer measurement can be realized in a single timestep. If the CNOT gate is realized with a time dependent dissipation on the data cat qubit (ingredient 3), two timesteps are needed.

Figure 19 shows an alternative realization of the Z stabilizer measurement using CZ$^4$ (and CZZ at the frontier) gates. Whichever of the three ingredients are used to perform this gate, it can be realized in a single timestep. On this figure, the CZ operations are shown by black dots.

Thus, using conditionally stabilized data cat qubits (ingredient 1, ingredient 3, and optionally ingredient 2), the X stabilizers can be measured in 2 timesteps and the Z stabilizers in a single timestep using CZ$^4$ gates. This gives a total of three timesteps. Using non stabilized data cat qubits (ingredient 1 and ingredient 2 only), both the X stabilizers and the Z stabilizers can be measured in a single timestep (using CZ$^4$ or CXX gates for the latter). This gives a total of two timesteps.

The CX^N and CZ^N gates can also be used in the XZZX code. Here each ancilla qubit measures XZZX stabilizer. In state-of-the-art implementation, this is done in four timesteps.

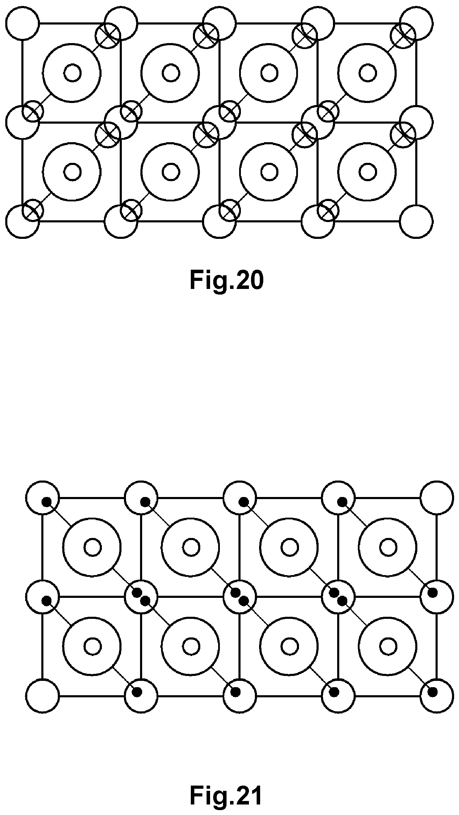

Figures 20 and 21 shows the two sequences to realize the XZZX measurements. The first sequence, shown of figure 20 can be made using conditionally stabilized data cat qubits (ingredient 1, ingredient 3, and optionally ingredient 2), which requires splitting CXX operations in two timesteps. If non-stabilized data cat qubits (ingredient 1 and ingredient 2 only) are used, the CXX operations can be performed in a single timestep. The second sequence, shown on figure 21 uses CZZ operations which can be performed in a single timestep whichever of the three ingredients are used. This gives a maximum total of three timesteps using stabilized cat qubits (ingredient 1, ingredient 3, and optionally ingredient 2). Using non stabilized data cat qubits (ingredient 1 and ingredient 2 only), both the CXX and the CZZ can be performed in a single timestep yielding a total of two timesteps.

As with the CXX gate, the MXX operation and the QECC, the invention thus allows to save at least one timestep.

In the above, only the case of a CXX gate between two cat qubits has been considered. The Applicant has however discovered that, in principle, it is sufficient for the invention to work that only the target qubits be cat qubits, while the control qubits can be in general a regular qubit, or any two-level system with two quantum states $|0\rangle$ and $|1\rangle$. In some embodiments, this regular control qubit can be a transmon qubit or a fluxonium qubit.

In this case, the realization of the CXX gate is implemented using the Hamiltonian $H$ =

$$\frac{\pi}{T}|1\rangle\langle 1| \otimes (a_2^\dagger a_2 - a_3^\dagger a_3)$$

where $a_2$ and $a_3$ are the annihilation operators of the two target cat qubits. Because the control is a regular qubit, there is no stabilization on the control qubit. In some embodiments, the two target cat qubits are stabilized by a conditional dissipation that depends on the state of the ancilla, described by the jump operators

$$L_2(t) = \sqrt{\kappa_2}(a_2^2 - \alpha^2|0\rangle\langle 0| - \left(\alpha e^{-\frac{i\pi}{T}t}\right)^2|1\rangle\langle 1|) \qquad \text{and} \qquad L_3(t) = \sqrt{\kappa_2}(a_3^2 -$$

$$\alpha^2|0\rangle\langle 0| - \left(\alpha e^{\frac{i\pi}{T}t}\right)^2|1\rangle\langle 1|)$$
.

Alternatively, any one of the stabilization schemes a) to e) described above in a form adapted to be made conditional on an ancilla qubit state may be used.

In this case, there is no compensation to apply on the control qubit, however performing this multiple qubit quantum gate instead of a sequence of two-qubit gates is still interesting as it leads to shorter gate times.

The same straightforward generalization applies to the case of a CX^N quantum gate between a regular level control qubit and N target cat qubits.

The CX^N gate between a regular qubit and N cat qubits can be used in a quantum error correcting code as described previously in the two target cat qubits case.


**Claims**

1.  Quantum system for performing a quantum gate comprising a command circuit (8) for selectively applying radiation, a number N of data resonators (4), with N equal to or greater than two, each data resonator (4) having a respective resonance frequency and being coupled to said command circuit (8) for stabilizing a respective data cat qubit, and an ancilla resonator (6) having an ancilla resonance frequency coupled to said command circuit (8) for stabilizing an ancilla cat qubit and being non-linearly coupled via said command circuit (8) to said data resonators (4), said command circuit (8) being arranged to perform a quantum gate by:

    a) while stabilizing said ancilla cat qubit, applying a radiation having said ancilla resonance frequency such that said data resonators (4) and said ancilla resonator (6) are substantially simultaneously subject to a Hamiltonian resulting from said radiation having said ancilla resonance frequency,
    b) turning off said radiation having said ancilla resonance frequency after a chosen duration.

2.  Quantum system according to claim 1, wherein said command circuit (8) is further arranged to apply a dissipative stabilization to at least one said data resonators (4) depending on time and on the state of the ancilla cat qubit during said operation a).

3.  Quantum system according to one of the preceding claims, wherein said command circuit (8) is further arranged to prepare said ancilla cat qubit with a state "|+>" or "|->" of the X operator prior to operation a), and to apply a measurement operation of operator X on said ancilla resonator (6) after turning off said radiation having said ancilla resonance frequency.

4.  Quantum system according to one of the preceding claims, wherein said command circuit (8) is arranged in operation a) to apply N radiations having said ancilla resonance frequency, such that the data resonators (4) are substantially simultaneously subject to a respective Hamiltonian resulting from one of said N radiations, with an even number of said N radiations being chosen to have opposite amplitudes.

5.  Quantum system for performing a quantum correction error code comprising a command circuit (8) for selectively applying radiation, a number J of data resonators (4), with J equal to or greater than two, each data resonator (4) having a respective resonance frequency and being coupled to said command circuit (8) for stabilizing a respective data cat qubit, and a number J-1 of ancilla resonators (6), each ancilla resonator having an ancilla resonance frequency coupled to said command circuit (8) for stabilizing an ancilla cat qubit,
    each of said J-1 ancilla resonators being non-linearly coupled to two respective data resonators of said J data resonators, and each data resonator of said J data resonator being connected at most to two ancilla resonators of said J-1 ancilla resonators, said command circuit (8) being arranged to perform J-1 quantum operations by:

1) for each ancilla resonator of said J-1 ancilla resonators, preparing an ancilla cat qubit in said each of said ancilla resonator of said J-1 ancilla resonators with a state "+" or "-" of the X operator,

2) for each ancilla resonator of said J-1 ancilla resonators, while stabilizing the ancilla cat qubit, applying a radiation having the ancilla resonance frequency of said each ancilla resonator to said command circuit (8) such that the data resonators (4) connected to said each ancilla resonator and said each ancilla resonator (6) are substantially simultaneously subject to a Hamiltonian resulting from said radiation having the ancilla resonance frequency of said each ancilla resonator,

3) turning off said radiations having said ancilla resonance frequency of said each ancilla resonator, and

4) applying a measurement on operator X on said each ancilla resonator.

6. Quantum system according to claim 5, wherein the system is arranged to perform a first half of the J-1 quantum operations simultaneously said operations being performed for each data cat qubit on a single ancilla cat qubit to which it is non-linearly coupled, and to perform the second half of the J-1 quantum operations simultaneously on the remainder ancilla cat qubit thereafter.

7. Quantum system according to claim 5, wherein the system is arranged to perform the J-1 quantum operations substantially simultaneously.

8. Quantum system according to one of claims 5 to 7, wherein the command circuit (8) is arranged to repeat the J-1 quantum operations periodically.

9. Method for performing a quantum gate between a number N of data resonators (4), with N equal to or greater than two, each data resonator (4) having a respective resonance frequency and hosting a respective data cat qubit, and an ancilla resonator (6) having an ancilla resonance frequency and hosting an ancilla cat qubit, said ancilla resonator (6) being non-linearly coupled to said data resonators (4), comprising the following operations:

a) while stabilizing said ancilla cat qubit, applying a radiation having said ancilla resonance frequency such that said data resonators (4) and said ancilla resonator (6) are substantially simultaneously subject to a Hamiltonian resulting from said radiation having said ancilla resonance frequency,

b) turning off said radiation having said ancilla resonance frequency after a chosen duration.

10. Method according to claim 9 in which operation a) further comprises applying a dissipative stabilization to at least one said data resonators (4) depending on time and on the state of the ancilla cat qubit.

11. Method according to claim 9 or 10, further comprising preparing said ancilla cat qubit with a state "+" or "-" of the X operator prior to operation a), further comprising c) applying a measurement operation of operator X on said ancilla resonator (6) after operation b).

12. Method according to one of the claims 9 to 11, in which operation a) comprises applying apply N radiations having said ancilla resonance frequency, such that the data resonators (4) are substantially simultaneously subject to a respective Hamiltonian resulting from a one of said N radiations, with an even number of said N radiations being chosen to have opposite amplitudes.

13. Method for performing a quantum correction error code between a number J of data resonators (4), with J equal to or greater than two, each data resonator (4) having a respective resonance frequency and hosting a respective data cat qubit, and a number J-1 of ancilla resonators (6), each ancilla resonator having an ancilla resonance frequency and hosting an ancilla cat qubit, each of said J-1 ancilla resonators being non-linearly coupled to two respective data resonators of said J data resonators, and each data resonator of said J data resonator being connected at most to two ancilla resonators of said J-1 ancilla resonators, said method comprising performing J-1 quantum operations by:

1) for each ancilla resonator of said J-1 ancilla resonators, preparing an ancilla cat qubit in said each of said ancilla resonator of said J-1 ancilla resonators with a state "+" or "-" of the X operator,

2) for each ancilla resonator of said J-1 ancilla resonators, while stabilizing the ancilla cat qubit, applying a radiation having the ancilla resonance frequency of said each ancilla resonator (6) such that the data resonators (4) connected to said each ancilla resonator (6) and said each ancilla resonator (6) are substantially simultaneously subject to a Hamiltonian resulting from said radiation having the ancilla resonance frequency of said each ancilla resonator (6),

3) turning off said radiations having said the ancilla resonance frequency of said each ancilla resonator (6), and
4) applying a measurement on operator X on said each ancilla resonator (6).

14. Method according to claim 13, in which a first half of the J-1 quantum operations are performed simultaneously for each data cat qubit on a single ancilla cat qubit to which it is non-linearly coupled, and in which the second half of the J-1 quantum operations are performed simultaneously on the remainder ancilla cat qubit thereafter.

15. Method according to claim 13, wherein the J-1 quantum operations are performed substantially simultaneously.

Fig.1

Fig.2

Fig.3

Fig.4

Fig.5

Fig.6

**Fig.7**

**Fig.8**

| Prepare ancilla cat qubit | 900 |
|---|---|
| Turn on Feedforward Hamiltonian | 910 |
| Measure ancilla cat qubit | 920 |

**Fig.9**

**Fig.10**

Measure ancilla cat qubits on row 2i+1 | 1100

Measure ancilla cat qubits on row 2i | 1110

**Fig.11**

**Fig.12**

**Fig.13**

**Fig.14**

Turn on Feedforward Hamiltonian | 1500

Turn off Feedforward Hamiltonian | 1510

**Fig.15**

**Fig.16**

Fig.17

Fig.18

Fig.19

**Fig.20**

**Fig.21**

| | Europäisches Patentamt European Patent Office Office européen des brevets | EUROPEAN SEARCH REPORT | Application Number EP 23 30 5297 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JEREMIE GUILLAUD ET AL: "Repetition Cat Qubits for Fault-Tolerant Quantum Computation", ARXIV.ORG, CORNELL UNIVERSITY LIBRARY, 201 OLIN LIBRARY CORNELL UNIVERSITY ITHACA, NY 14853, 20 April 2019 (2019-04-20), XP081557716, DOI: 10.1103/PHYSREVX.9.041053 * the whole document * | 1-15 | INV. G06N10/20 G06N10/70 |
| A | DAVID SCHWERDT ET AL: "Comparing Two-Qubit and Multi-Qubit Gates within the Toric Code", ARXIV.ORG, CORNELL UNIVERSITY LIBRARY, 201 OLIN LIBRARY CORNELL UNIVERSITY ITHACA, NY 14853, 17 February 2022 (2022-02-17), XP091146564, DOI: 10.1103/PHYSREVA.105.022612 * the whole document * | 1-15 | |
| A | SU QI-PING ET AL: "Efficient scheme for realizing a multiplex-controlled phase gate with photonic qubits in circuit quantum electrodynamics", FRONTIERS OF PHYSICS, HIGHER EDUCATION PRESS, BEIJING, vol. 17, no. 5, 2 May 2022 (2022-05-02), XP037814882, ISSN: 2095-0462, DOI: 10.1007/S11467-022-1163-4 [retrieved on 2022-05-02] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 1 August 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 30 5297

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QI-PING SU ET AL: "Single-step implementation of a hybrid controlled-NOT gate with one superconducting qubit simultaneously controlling multiple target cat-state qubits", ARXIV.ORG, CORNELL UNIVERSITY LIBRARY, 201 OLIN LIBRARY CORNELL UNIVERSITY ITHACA, NY 14853, 28 August 2022 (2022-08-28), XP091304501, DOI: 10.1103/PHYSREVA.105.062436 * the whole document * | 1-15 | |
| A,D | GUILLAUD JÉRÉMIE ET AL: "Error rates and resource overheads of répétition cat qubits", PHYSICAL REVIEW A,, vol. 103, no. 4, 13 April 2021 (2021-04-13), pages 1-15, XP002808076, ISSN: 2469-9926, DOI: 10.1103/PHYSREVA.103.042413 * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 1 August 2023 | Moro Pérez, Gonzalo |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÉRÉMIE GUILLAUD ; MAZYAR MIRRAHIMI.** Repetition Cat Qubits for Fault-Tolerant Quantum Computation. *Phys. Rev.,* 12 December 2019, vol. X 9, 041053
- **SHRUTI et al.** Bias-preserving gates with stabilized cat qubits. *SCIENCE ADVANCES,* 21 August 2020, vol. 6 (34
- **JÉRÉMIE GUILLAUD ; MAZYAR MIRRAHIMI.** Error rates and resource overheads of repetition cat qubits. *Phys. Rev.,* 13 April 2021, vol. A 103, 042413
- **CHRISTOPHER CHAMBERLAND et al.** Building a Fault-Tolerant Quantum Computer Using Concatenated Cat Codes. *PRX Quantum,* 23 February 2022, vol. 3, 010329
- **ANDREW S. DARMAWAN et al.** Practical Quantum Error Correction with the XZZX Code and Kerr-Cat Qubits. *PRX Quantum,* 16 September 2021, vol. 2, 030345
- **LESCANNE R.** Exponential suppression of bit-flips in a qubit encoded in an oscillator. *Nature Physics,* 2020